## Europäisches Patentamt
## European Patent Office
## Office européen des brevets

(19)

(11) Veröffentlichungsnummer: **0 480 219 A2**

# EUROPÄISCHE PATENTANMELDUNG

(12)

(21) Anmeldenummer: **91116022.4**

(22) Anmeldetag: **20.09.91**

(51) Int. Cl.5: **B24D 3/14**, B24D 3/16, B24D 18/00

(30) Priorität: **12.10.90 DE 4032452**

(43) Veröffentlichungstag der Anmeldung:
**15.04.92 Patentblatt 92/16**

(84) Benannte Vertragsstaaten:
**FR GB IT NL**

(71) Anmelder: **DIDIER-WERKE AG**
**Lessingstrasse 16-18**
**W-6200 Wiesbaden(DE)**

(72) Erfinder: **Ganev, Dimiter**
**Haldenstrasse 37**
**W-4630 Bochum(DE)**

(74) Vertreter: **Brückner, Raimund, Dipl.-Ing.**
**c/o Didier-Werke AG Lessingstrasse 16-18**
**W-6200 Wiesbaden(DE)**

(54) **Verfahren zur Herstellung eines Schleifkörpers.**

(57) Verfahren zur Herstellung eines Schleifkörpers für die Bearbeitung von getrockneten, getemperten oder ungebrannten keramischen Formkörpern, wobei eine Mischung aus Schleifkörnung, keramischer Grundkörnung, plastifizierendem Material und anorganischem Bindemittel auf einem Träger aus Metall durch Stampfen oder Pressen zu einer Schicht eines Schleifkörpers aufgetragen und verdichtet und bei Temperaturen bis zu 160°C getrocknet wird.

EP 0 480 219 A2

Die Erfindung betrifft ein Verfahren zur Herstellung eines Schleifkörpers für die Bearbeitung von getrockneten, getemperten oder ungebrannten keramischen Formkörpern, wobei aus einer Mischung aus keramischem Schleifkorn und einem Bindemittel der Schleifkörper geformt und auf einem Träger befestigt wird.

Schleifkörper aus Stahl in Form von Stahlfeilen und aus nichtmetallischem und keramischem Werkstoff sind bekannt. Der keramische Werkstoff wird aus einer Mischung hergestellt, die keramisches Schleifkorn und ein Bindemittel enthält. Für die Anwendung des Schleifkörpers wird dieser mit einer metallischen Halterung oder mit einem metallischen Träger verbunden. Der Schleifkörper kann die Form einer Scheibe oder Schicht haben, von der zumindest eine Seite mit dem metallischen Träger verbunden ist (Technik-Lexikon RoRoRo, Fertigungstechnik 4, 1972, Seite 824.10; DE-OS 26 01 788).

Schleifkörper aus keramischem Werkstoff werden aus einer Mischung hergestellt, die spezielles splittriges oder kubisches Schleifkorn (Korund, Siliciumcarbid) und keramische Bindemittel, wie Aluminiumsilikat, Tonerde bzw. feingemahlenen Korund, Natriumsilikat, Aluminiumphosphat, Bentonit enthalten. Die aus der Mischung geformten Schleifkörper können durch Brennen eine versinterte keramische Bindung oder eine durch Trocknen erhaltene Silikat- bzw. Wasserglas- oder Phosphatbindung besitzen (Handbuch der Keramik, Verlag Schmid GmbH, Freiburg i.Br., 1975, Gruppe II N: G. Schoppenhauer: keramische Schleifscheiben, Seiten 1 bis 17, insbesondere Seite 13, 9. Bindungen; Hadert,H: Aufbau von Schleifscheiben und Schleifpapieren. In: Chemiker Zeitung/Chem. Apparatur, 90. Jahrgang (1966) Nr. 23, Seiten 801 bis 810, insbes.802, 803).

Bei getrockneten, getemperten oder ungebrannten keramischen Formkörpern ist in vielen Fällen eine Bearbeitung der Oberfläche durch schleifen, schaben, feilen notwendig, wobei Material von der Oberfläche der Formkörper abgetragen wird. Für die Bearbeitung werden Feilen aus Stahl vorgesehen, die aber im Betrieb stark verschleißen und schnell ihre Wirksamkeit verlieren. Keramisch gebrannte bzw. gesinterte Schleifkörper sind sehr aufwendig in der Herstellung und für die Bearbeitung der Formkörper von Hand zu unhandlich. Ferner stellt die Verbindung des Schleifkörpers mit dem metallischen Träger durch Sintern (DE-OS 26 01 788), durch Kunstharzbindung (DE-OS 39 07 443) oder unter Verwendung von Aktivlot (DE-OS 39 18 606) einen hohen Aufwand dar.

Die Aufgabe wird in einem Verfahren zur Herstellung eines Schleifkörpers der eingangs genannten Art gesehen, wonach in einfacher Weise ein leicht handhabbarer Schleifkörper für die Bearbeitung von getrockneten, getemperten oder ungebrannten keramischen Formkörpern erhalten wird. Die Aufgabe findet ihre Lösung nach den Ansprüchen.

Für den Schleifkörper wird aus den Komponenten Schleifkörnung, Grundkörnung, plastifizierendes Material, anorganisches Bindemittel und Verarbeitungsfeuchtigkeit eine feuchte preßfähige Mischung hergestellt. Durch Auftrag bzw. Aufpressen auf einen Träger und anschließendes Trocknen der Mischung wird der Schleifkörper erhalten. Als Schleifkörnung sind splittriger oder kubischer Korund und Siliciumcarbid, als Grundkörnung kantige oder runde Schamottekörner oder Gesteinskörner, wie z.B. gemahlener Basalt oder Schiefermehl geeignet. Als plastifizierendes Material wird gemahlener Ton und eventuell zusätzlich feinteilige Tonerde oder calcinierte Tonerde in einer Menge von insgesamt 5 bis 15 Gew.-%, bezogen auf die trockene Mischung, vorgesehen. Als anorganisches Bindemittel soll eine übliche Lösung von Monoaluminiumphosphat, Natriumpolyphosphat oder Natriumwasserglas verwendet werden. Als Träger aus Metall eignen sich insbesondere flache Feilen, deren Riffelung vorteilhaft für den Auftrag und die Verbindung des Schleifkörpers ist. Der Träger kann als Boden in eine kastenförmige Form eingelegt werden, in der die feuchte preßfähige Mischung durch Stampfen oder Pressen zu einer Schicht aufgetragen und verdichtet wird.

Durch die Trocknung des mit dem Träger verbundenen Schleifkörpers wird der für die Bearbeitung von getrockneten, getemperten oder ungebrannten keramischen Formkörpern direkt einsetzbare und leicht handhabbare Schleifkörper erhalten. Der Schleifkörper besitzt eine hohe, gleichmäßige und ausreichend lange Standzeit.

In vorteilhafter Ausgestaltung wird auf den Träger aus Metall zunächst eine erste Schicht aufgetragen. Hierdurch wird bei einem Schleifkörper mit grober Körnung bis zu 5 mm die Verbindung zwischen dem Träger und dem Schleifkörper verbessert.

Der Schleifkörper auf dem Träger nach der Erfindung wird zur Nachbearbeitung der Oberfläche von geformten keramischen Körpern, wie z.B. der Oberfläche von gestampften Formkörpern, zur Beseitigung von Formpreßgrat oder von leichtem Übermaß und zur Herstellung von kreisbogenförmigen Flächen an keramischen Formkörpern verwendet. Während der Bearbeitung der keramischen Körper bleibt die Arbeitsfläche des Schleifkörpers ausreichend scharf, so daß eine gleichmäßige Schleifleistung mit dem Schleifkörper möglich ist. Verschlissene oder beschädigte Schleifkörper können entweder in einfacher Weise durch den Auftrag von neu hergestellter Mischung oder durch den kompletten neuen Auftrag der Mischung auf den wiederverwendbaren Träger in den gebrauchsfertigen Zustand versetzt werden.

Zur Bearbeitung von getrocknetem, ungebrannten und eventuell getemperten keramischen Formkörpern werden in den Beispielen die Mischungen für Schleifkörper angegeben:

Beispiel 1:

Sinterkorund, Körnung max. 0,4 mm
60 Gew.-%
calciniertes $Al_2O_3$, unter 0,06 mm
18 Gew.-%
Monoaluminiumphosphatlösung
22 Gew.-%

Beispiel 2:

Für die erste Schicht (Grundschicht)
Sinterkorund, Körnung 0,2 - 3 mm
40 Gew.-%
calciniertes $Al_2O_3$
20 Gew.-%
Tonmineral gemahlen, pulverförmig
20 Gew.-%
Orthophosphorsäure
20 Gew.-%
Für die zweite Schicht (Arbeitsschicht)
Sinterkorund, Körnung 1 - 3 mm
90 Gew.-%
Monoaluminiumphosphatlösung
10 Gew.-%

Die gemischten und zu einer steifen Masse verarbeiteten Mischungen wurden in Schichten von einigen Millimetern bis etwa 10 Millimeter auf den Träger in Form einer stählernen Feile mit der Arbeitsfläche 250 x 25 mm durch Aufstreichen und Aufpressen aufgetragen. Die auf dem Träger zu einer Schicht geformten Schleifkörper wurden bei Temperaturen bis zu 160 ° C getrocknet.

**Patentansprüche**

1. Verfahren zur Herstellung eines Schleifkörpers für die Bearbeitung von getrockneten, getemperten oder ungebrannten keramischen Formkörpern, wobei aus einer Mischung aus keramischem Schleifkorn und einem Bindemittel der Schleifkörper geformt und auf einem Träger befestigt wird,
   dadurch gekennzeichnet,
   daß die feuchte, preßfähige Mischung aus Schleifkörnung, keramischer Grundkörnung, plastifizierendem Material und anorganischem Bindemittel auf dem Träger aus Metall durch Stampfen oder Pressen zu einer Schicht eines Schleifkörpers aufgetragen und verdichtet und bei Temperaturen bis zu 160 ° C getrocknet wird.

2. Verfahren nach Anspruch 1, dadurch gekennzeichnet, daß auf dem Träger aus Metall eine erste Schicht einer Mischung aus keramischer Grundkörnung, plastifizierendem Material und anorganischem Bindemittel aufgetragen und danach die Schicht des Schleifkörpers geformt wird.